(19) Europäisches Patentamt
European Patent Office
Office européen des brevets

(11) **EP 3 516 487 B1**

(12) **FASCICULE DE BREVET EUROPEEN**

(45) Date de publication et mention de la délivrance du brevet:
**28.10.2020 Bulletin 2020/44**

(21) Numéro de dépôt: **17783916.4**

(22) Date de dépôt: **19.09.2017**

(51) Int Cl.:
*G06F 3/038* $^{(2013.01)}$        *G06F 3/041* $^{(2006.01)}$

(86) Numéro de dépôt international:
**PCT/FR2017/052508**

(87) Numéro de publication internationale:
**WO 2018/055280 (29.03.2018 Gazette 2018/13)**

(54) **DISPOSITIF À AFFICHAGE PRÉDICTIF**

PRÄDIKTIVE ANZEIGEVORRICHTUNG

PREDICTIVE DISPLAY DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.09.2016 FR 1658833**

(43) Date de publication de la demande:
**31.07.2019 Bulletin 2019/31**

(73) Titulaires:
• **INRIA - Institut National de Recherche en Informatique et en Automatique**
**78150 Le Chesnay (FR)**
• **Université de Lille**
**59655 Villeneuve d'Ascq Cedex (FR)**

(72) Inventeurs:
• **CASIEZ, Géry**
**59286 Roost Warendin (FR)**
• **EFIMOV, Denis**
**59100 La Madeleine (FR)**
• **USHIROBIRA, Rosane**
**59650 Villeneuve d'Ascq (FR)**
• **ARANOVSKIY, Stanislav**
**35000 Rennes (FR)**
• **ROUSSEL, Nicolas**
**59650 Villeneuve d'Ascq (FR)**

(74) Mandataire: **Cabinet Netter**
**36, avenue Hoche**
**75008 Paris (FR)**

(56) Documents cités:
**US-A1- 2014 035 827**

**Description**

L'invention concerne le domaine de l'interaction homme-machine et plus spécifiquement la gestion de la latence de l'affichage d'une entrée utilisateur.

L'avènement de la technologie résistive puis capacitive comme interface d'entrée utilisateur et leur intégration dans les écrans ont révolutionné les usages.

Le sens du toucher et sa coordination avec la vue sont de nature si instinctive que les ordinateurs portables ont été rejoints en usage par les téléphones portables et les tablettes.

Ces nouveaux usages posent le problème de la gestion de la latence. En effet, entre la latence de l'interface, celle du système d'exploitation traitant cette entrée, celle de l'application qui l'utilise et l'affichage, il est fréquent que le temps entre un mouvement d'un ou plusieurs doigts sur l'écran et l'affichage de l'action résultante soit de plus de 50 ms.

Or la latence est perçue par la plupart des utilisateurs à partir de 20 ms, et est gênante dès 25 ms dans le cas des interfaces tactiles. Et plus l'adoption de ces technologies progresse, plus les utilisateurs deviennent exigeants et plus le seuil de latence induisant une gêne baisse.

Ce problème de latence se retrouve également dans le domaine de la réalité virtuelle, par exemple lors du port d'un casque qui détermine la rotation de la tête pour modifier l'affichage.

À ce jour, les solutions utilisées pour gérer ce problème de latence sont simplistes et n'ont pas de réelle efficience. L'état de l'art pertinent est divulgué dans le document US 2014/035827 A.

L'invention vient améliorer la situation. À cet effet, l'invention propose un dispositif informatique comprenant une interface homme-machine d'entrée, un contrôleur et un affichage, le contrôleur étant agencé pour commander l'affichage en fonction d'une valeur de commande mesurée à l'interface homme-machine d'entrée à une première fréquence de mesure. Le contrôleur comprend un dérivateur et est agencé, entre un premier instant et un deuxième instant séparés par une durée tirée de la première fréquence de mesure, pour :

- appeler le dérivateur pour calculer une estimation de la dérivée de la valeur de commande au deuxième instant à partir de la valeur de commande au premier instant et de la durée tirée de la première fréquence,
- calculer une valeur de facteur de lissage au deuxième instant à partir de l'estimation de la dérivée première de la valeur de commande au deuxième instant et d'une valeur de facteur de lissage au premier instant,
- calculer une valeur d'affichage à partir de la valeur de commande au premier instant et d'une valeur tirée de l'estimation de la dérivée de la valeur de commande au deuxième instant et de la valeur du facteur de lissage au deuxième instant, et
- commander l'affichage avec la valeur d'affichage.

Ce dispositif est particulièrement avantageux car il permet de s'abstraire de la plupart des problèmes de latence en prédisant avec précision la valeur de la commande d'entrée entre deux mesures, et en adaptant cette prédiction à la situation. En effet, plus le déplacement correspondant à la commande d'entrée est lent, plus la perception de la latence est faible, et le risque pris par la prédiction doit être minimisé.

Dans diverses variantes, le dispositif selon l'invention peut présenter une ou plusieurs des caractéristiques suivantes :

- le dérivateur calcule l'estimation de la dérivée de la valeur de commande au deuxième instant à partir d'un estimateur des dérivées première à cinquième de la valeur de commande,
- le dérivateur exécute une boucle à une deuxième fréquence supérieure à la première fréquence dans laquelle l'estimation de la dérivée de la valeur de commande est mise à jour entre le premier instant et le deuxième instant en ajoutant de manière répétée aux dérivées première à cinquième de la valeur de commande au premier instant une valeur tirée de la différence entre la valeur d'affichage au premier instant et la valeur de commande tirée de l'interface homme-machine d'entrée au premier instant,
- le dérivateur calcule la valeur de facteur de lissage en ajoutant une valeur fixe à un multiple de la valeur de facteur de lissage au premier instant lorsque l'estimation de la dérivée première de la valeur de commande au deuxième instant est supérieure à une vitesse seuil, et
- le dérivateur calcule la valeur d'affichage en ajoutant à la valeur de commande au premier instant le produit de l'estimation des dérivées secondes à quatrième de la valeur de commande au deuxième instant par un vecteur d'optimisation et par la valeur du facteur de lissage.

L'invention concerne également un procédé de calcul de commande d'affichage comprenant la mesure à une première fréquence d'une valeur de commande avec une interface homme-machine d'entrée, et, entre un premier instant et un deuxième instant séparés par une durée tirée de la première fréquence :

a. calculer une estimation de la dérivée de la valeur de commande au deuxième instant à partir de la valeur de commande au premier instant et de la durée tirée de la première fréquence,

b. calculer une valeur de facteur de lissage au deuxième instant à partir de l'estimation de la dérivée première de la valeur de commande au deuxième instant et d'une valeur de facteur de lissage au premier instant,

c. calculer une valeur d'affichage à partir de la valeur de commande au premier instant et d'une valeur tirée de l'estimation de la dérivée de la valeur de commande au deuxième instant et de la valeur du facteur de lissage,

d. commander l'affichage avec la valeur d'affichage.

En variante, le procédé peut comporter une ou plusieurs des opérations suivantes :

- l'opération a. comprend le calcul de l'estimation de la dérivée de la valeur de commande au deuxième instant à partir d'une estimation des dérivées première à cinquième de la valeur de commande,
- l'opération a. comprend la définition du premier instant comme instant courant, et la répétition des opérations suivantes, à une deuxième fréquence supérieure à la première fréquence :

   a1. définir un instant d'estimation en ajoutant une durée tirée de la deuxième fréquence à l'instant courant,
   a2. estimer les dérivées première à cinquième de la valeur de commande à l'instant d'estimation à partir de leurs valeurs à l'instant courant et de la différence entre la valeur calculée à l'opération c. au premier instant et la valeur de commande tirée de l'interface homme-machine d'entrée au premier instant,
   a3. si la différence entre l'instant d'estimation et le premier instant est inférieure à la durée tirée de la première fréquence, définir l'instant d'estimation comme instant courant, et répéter les opérations a1. à a3,

- dans l'opération b., la valeur de facteur de lissage est calculée en ajoutant une valeur fixe à un multiple de la valeur de facteur de lissage au premier instant lorsque l'estimation de la dérivée première de la valeur de commande au deuxième instant est supérieure à une vitesse seuil,
- l'opération c. calcule la valeur d'affichage en ajoutant à la valeur de commande au premier instant le produit de l'estimation des dérivées secondes à quatrième de la valeur de commande au deuxième instant par un vecteur d'optimisation et par la valeur du facteur de lissage.

D'autres caractéristiques et avantages de l'invention apparaîtront mieux à la lecture de la description qui suit, tirée d'exemples donnés à titre illustratif et non limitatif, tirés des dessins sur lesquels :

- la figure 1 représente un diagramme schématique d'un dispositif selon l'invention, et
- la figure 2 représente un exemple de mise en œuvre d'une fonction de prédiction de commande d'affichage.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

La présente description est de nature à faire intervenir des éléments susceptibles de protection par le droit d'auteur et/ou le copyright. Le titulaire des droits n'a pas d'objection à la reproduction à l'identique par quiconque du présent document de brevet ou de sa description, telle qu'elle apparaît dans les dossiers officiels. Pour le reste, il réserve intégralement ses droits.

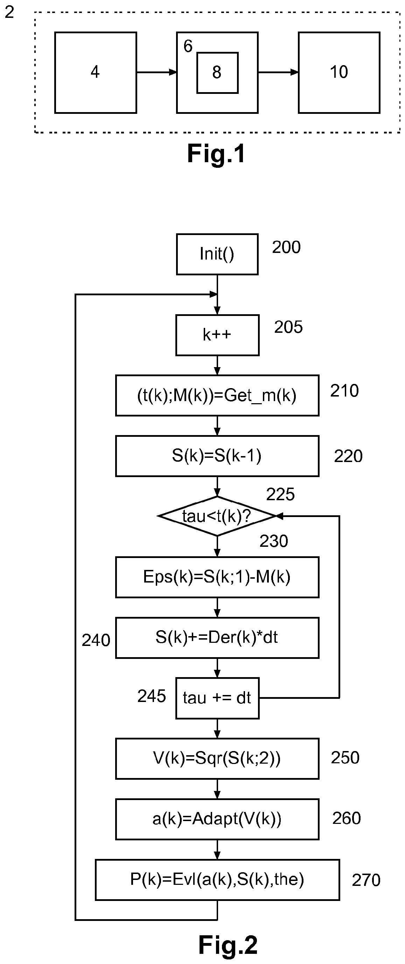

En outre, la description détaillée est augmentée de l'Annexe A, qui donne la formulation de certaines formules mathématiques mises en œuvre dans le cadre de l'invention. Cette Annexe est mise à part dans un but de clarification, et pour faciliter les renvois. Elle est partie intégrante de la description, et pourra donc non seulement servir à mieux faire comprendre la présente invention, mais aussi contribuer à sa définition, le cas échéant. La figure 1 représente une vue schématique d'un dispositif informatique 2 selon l'invention. Le dispositif 2 comprend une interface homme machine d'entrée 4, reliée à un contrôleur 6 qui comprend un dérivateur 8 et commande un affichage 10.

Dans l'exemple décrit ici, le dispositif 2 est un téléphone intelligent, dont l'écran tactile sert d'interface homme machine d'entrée 4 et d'affichage 6. En variante, le dispositif 2 pourrait être tout autre dispositif informatique, comme une tablette, un ordinateur relié à une souris comme interface homme machine d'entrée 4, ou encore un casque de réalité virtuelle comprenant un outil de détection des rotations de la tête comme interface homme machine d'entrée 4, etc.

D'une manière générale, le contrôleur 6 et le dérivateur 8 peuvent être réalisés sous la forme d'un code informatique approprié exécuté sur un ou plusieurs processeurs. Par processeurs, il doit être compris tout processeur adapté au calcul de positions et de dérivées de ces positions. Un tel processeur peut être réalisé de toute manière connue, sous la forme d'un microprocesseur pour ordinateur personnel, d'une puce dédiée de type FPGA ou SoC (« system on chip » en anglais), d'une ressource de calcul sur une grille, d'un microcontrôleur, ou de toute autre forme propre à fournir la puissance de calcul nécessaire à la réalisation décrite plus bas. Un ou plusieurs de ces éléments peuvent également être réalisés sous la forme de circuits électroniques spécialisés tel un ASIC. Une combinaison de processeur et de circuits électroniques peut également être envisagée.

Les données manipulées dans le cadre de l'invention peuvent être stockées sur tout type de stockage de données propre à recevoir des données numériques : disque dur, disque dur à mémoire flash (SSD en anglais), mémoire flash sous toute forme, mémoire vive, disque magnétique, stockage distribué localement ou dans le cloud, etc. Les données calculées par le dispositif peuvent être stockées sur tout type de mémoire. Ces données peuvent être effacées après que le dispositif ait effectué ses tâches ou conservées.

L'affichage 10 peut être tout type d'affichage connu, des écrans à canons d'électrons aux écrans LCD, LED, OLED et autres écrans plats sous toutes leurs formes.

Comme cela a été expliqué dans l'introduction, dans un dispositif classique, plusieurs sources de latence viennent s'accumuler entre la saisie à l'interface homme machine d'entrée et l'affichage de la commande correspondante :

- la latence d'acquisition de l'interface homme machine d'entrée 4,
- la latence de communication entre l'interface homme machine d'entrée 4 et le contrôleur 6,
- la latence de traitement par le système d'exploitation exécuté par le contrôleur 6,
- la latence de traitement de l'application qui interagit avec l'interface homme machine d'entrée 4, et
- la latence de l'affichage 10.

Le dispositif 2 est différent en ce qu'il utilise les données issues de l'interface homme machine d'entrée 4 pour réaliser une estimation de la valeur de commande, sans se soucier de réaliser une réconciliation entre son estimation et une mesure « réelle » de la valeur de commande.

Dit autrement, le dispositif 2 utilise le contrôleur 6 et son dérivateur 8 pour estimer en permanence la valeur de commande et pour commander l'affichage 10 en conséquence, mais ce ne sont pas les données issues de l'interface homme machine d'entrée 4 elles-mêmes qui définissent cette commande. La divergence entre l'estimation et la réalité est évitée par la nature même du contrôleur 6 et du dérivateur 8, qui sont construits pour converger vers les valeurs mesurées.

La figure 2 représente un exemple d'une fonction mise en œuvre par le contrôleur 6 à cet effet.

Dans une opération 200, le contrôleur 6 initialise certaines des variables de l'algorithme d'estimation de la valeur de commande. Plus précisément, la variable de temps tau, qui est la variable de temps qui cadence la commande de l'affichage 10, est initialisée avec une valeur initiale, par exemple 0. De même, le tableau S d'estimation est initialisé avec les valeurs des données de valeur de commande mesurée par l'interface homme machine d'entrée 4 au temps tau.

Dans l'exemple décrit ici, le tableau S présente cinq lignes qui représentent chacune une estimation d'une dérivée d'une valeur de commande à estimer, et autant de colonnes qu'il y a de valeurs de commandes à estimer. Par exemple, dans l'exemple de la figure 1, s'agissant d'un écran, le tableau S présente deux colonnes : une pour la dimension x et l'autre pour la dimension y, qui permettront de suivre le déplacement du doigt de l'utilisateur. Les lignes représentent pour leur part les dérivées d'ordre 0 à 5 de la valeur de commande de chaque colonne, c'est-à-dire la valeur de commande et ses dérivées de la première à la quatrième. Pour désigner le tableau S à la k-ième itération, la notation S(k) sera retenue, selon la formule [001] de l'Annexe A.

Au temps tau d'initialisation, seule la valeur de commande est connue, aussi le tableau S(k) est initialisé avec les valeurs de commande mesurées selon la formule [002] de l'Annexe A.

Dans l'exemple décrit ici, le dérivateur 8 met en œuvre un estimateur de dérivée appelé HOM décrit dans l'article de W. Perruquetti, T. Floquet, E. Moulay, "Finite-time observers: application to secure communication", IEEE Transactions on Automatic Control, 53(1), 2008, 356-360, qui définit le tableau S et les calculs décrits ci-après. En variante, d'autres méthodes d'estimation de la dérivée pourraient être retenues, qui impliqueraient une autre forme au tableau S et aux formules l'affectant et/ou l'utilisant.

De même, la valeur de commande de l'affichage 10 est définie par les valeurs des données de valeur de commande mesurée par l'interface homme machine d'entrée 4 au temps tau, le facteur de lissage a(0) est initialisé à 0, et un indice k est mis à 0.

Ensuite, dans une opération 205, l'indice k est incrémenté. Le dérivateur 8 fonctionne par boucle entre deux instants successifs de réception de données de valeur de commande mesurée par l'interface homme machine d'entrée 4.

La boucle est initialisée dans une opération 210 avec la réception des données de valeur de commande mesurée par l'interface homme machine d'entrée 4 par le biais d'une fonction Get_m(), qui retourne un marqueur de temps t(k) qui correspond à l'instant de mesure et un tableau M(k) qui comprend les mesures des valeurs de commande - autant qu'il y a de colonnes dans le tableau S(k) - à l'instant t(k). En général, les instants t(k) et t(k+1) seront séparés par une durée fixe, qui correspond à la fréquence d'acquisition de l'interface homme machine d'entrée 4. En variante, cette fréquence est variable.

Le tableau S(k) est alors initialisé pour la boucle courante avec sa dernière valeur lors de la boucle précédente dans une opération 220, puis la boucle d'estimation des dérivées est lancée dans une opération 225, dans laquelle la valeur de la variable tau est comparée au temps t(k) pour vérifier si la boucle doit s'arrêter.

Ensuite, dans une opération 230, une variable Eps(k) est déterminée en comparant la première ligne du tableau S(k) et le tableau M(k). La variable Eps(k) contient donc à chaque exécution de la boucle une mesure de la distance entre l'estimation de la valeur de commande et la dernière mesure de cette valeur. Cette variable est utilisée dans une opération 240 qui met à jour chaque colonne du tableau S(k) sur la base du modèle HOM, selon la formule [003] de l'Annexe A. Dans cette formule :

- dt est un paramètre général temporel de mise à jour de l'estimateur dont le choix sera expliqué plus bas, et
- b et 1 sont des vecteurs d'optimisation, b contient autant de colonnes que le tableau S(k), 1 a deux éléments, et sont spécifiques du dérivateur HOM.

Pour simplifier, la notation de l'opération 230 concernant le tableau S(k) a été reprise, et S(k)[1,:] désigne la première ligne du tableau S(k), S(k)[:,1] désigne la première colonne. De même, il doit être compris que cette notation s'étend aux équations : il y a autant de colonnes que dans le tableau S(k). L'indice i désigne la colonne de chaque vecteur. Ainsi, S(k)[2:4,:] représente les lignes 2 à 4 de S(k), b[:,2] est la deuxième colonne de b, et Eps(k)[i] et l[i] sont les éléments correspondants des vecteurs Eps(k) et 1.

L'opération 230 revient à discrétiser la dérivée du tableau S(k) sur une durée dt. Ensuite, tau est mis à jour en lui rajoutant dt dans une opération 245 et la boucle reprend avec l'opération 225.

Une fois que tau a atteint la valeur t(k), le dérivateur 8 a mis à jour le tableau S(k) avec ses dérivées, et calcule dans une opération 250 la vitesse correspondante, en calculant la norme de la deuxième ligne du tableau S(k), par une fonction Sqr() qui calcule la racine carrée de la somme des carrés des éléments de cette ligne, étant rappelé que la deuxième ligne du tableau S(k) contient une estimation de la dérivée première.

Cette vitesse est essentielle car elle est utilisée pour définir la valeur du facteur de lissage a(k) pour la boucle courante. En effet, selon la vitesse de déplacement estimée associée à la commande, la perception de la latence par l'utilisateur sera très différente :

- si la vitesse est faible, alors l'objet correspondant à la commande se déplace peu, et la latence est nettement moins perceptible - en revanche, toute erreur d'estimation entraînera une correction qui gênera fortement l'utilisateur,
- si la vitesse est importante, alors l'objet correspondant à la commande se déplace beaucoup, et la latence est nettement plus perceptible - l'estimation prend alors tout son sens, car elle permet de compenser la gêne que la latence créerait.

Ainsi, la Demanderesse a découvert qu'en dessous d'une vitesse seuil, il était intéressant de réduire l'effet de l'estimation, et de l'augmenter au-dessus. Pour cela, dans une opération 260, le dérivateur 8 met à jour la valeur du facteur de lissage a(k) en exécutant une fonction Adapt() qui applique la formule [004] de l'Annexe A en utilisant la vitesse V(k) comme argument.

Dans cette formule, g est un paramètre général dont le réglage permet de doser l'intensité de l'estimation en fonction du dépassement du seuil de vitesse V0, qui est également un paramètre général qui peut être fixé en fonction de l'application. Cette formule a l'avantage de générer une transition harmonieuse lorsque la vitesse V(k) est proche du seuil V0. En variante, le facteur de lissage a(k) pourrait être réglé différemment, voire ignorer le problème de transition autour de V0.

Enfin, dans une opération 270, la valeur de la commande P(k) pour commander l'affichage 10 est calculée à partir de la mesure M() au temps t(k), et d'une fonction Evl() qui reçoit comme arguments le facteur de lissage a(k), le tableau S(k) et un vecteur d'optimisation the.

La fonction Evl() applique la formule [005] de l'Annexe A, dans laquelle S(k)[2:4,:] désigne les deuxième à quatrième lignes du tableau S(k), et le vecteur d'optimisation the, qui contient trois lignes et autant de colonnes que le tableau S(k) et est spécifique du dérivateur HOM.

Ainsi, la valeur de commande P(k) est un vecteur qui est calculé à partir des mesures des valeurs de commande issues de l'interface homme machine d'entrée 4 ajoutées de la dérivée estimée du mouvement par le dérivateur 8.

Après l'opération 260, la boucle de calcul de commande pour l'affichage 10 est terminée, et la boucle reprend avec l'opération 205.

Dans ce qui précède, le temps entre deux mesures de l'interface homme machine d'entrée 4 (de l'ordre de 1 ms pour une souris, ou de 8 ms pour un écran tactile) est très inférieur à la latence (de l'ordre de plusieurs dizaines de ms). Ainsi, le fait d'estimer en permanence la commande plutôt que de la mesurer est encadré par l'introduction fréquente dans le calcul de mesures « réelles », tout en évitant toutes les latences liées au traitement de ces mesures par un dispositif classique (sauf la latence d'acquisition et celle de l'affichage).

Comme cela apparaît plus haut, l'invention utilisent plusieurs paramètres, dont certains sont généraux, et d'autres spécifiques au dérivateur HOM utilisé.

Parmi les paramètres généraux, le paramètre dt représente un intervalle d'intégration pour réaliser l'estimation de dérivée. Ce paramètre représente donc un compromis entre le temps et la puissance de calcul nécessaires et la précision obtenue.

De manière empirique, la Demanderesse a découvert qu'une valeur dt égale à la moitié de la durée entre deux mesures de l'interface homme machine d'entrée 4 offre une bonne qualité et un coût de calcul raisonnable. Cela signifie par exemple que les opérations 225 à 245 seront répétées deux fois.

Toujours parmi les paramètres généraux, le seuil de vitesse V0 détermine la vitesse à partir de laquelle le dérivateur va peser lourdement dans l'estimation. Empiriquement, la Demanderesse a établi qu'une déviation d'environ 10 mm (qui correspond à un seuil de perception) pour une durée de 70 ms (qui correspond à une latence moyenne des dispositifs classiques) donne une vitesse de 143 mm.s$^{-1}$.

Enfin, le paramètre g de transition en deçà et au-delà de V0 a été fixé à 0,259 pour le cas d'une durée de 1 ms entre deux mesures de l'interface homme machine d'entrée 4, en vue d'assurer un basculement sur 10 ms.

Ces paramètres pourront être adaptés selon l'application recherchée, notamment selon la durée entre deux mesures de l'interface homme machine d'entrée 4, mais également en fonction de la latence incompressible (celle liée à l'acquisition et à l'affichage), ainsi qu'en fonction de l'application (écran tactile, réalité virtuelle, manipulation de souris, etc.) et de l'activité associée (jeu rapide, immersion dans un univers, simulation de chirurgie, etc.).

Le paramètre the, comme les paramètres 1 et b, sont obtenus dans l'exemple décrit ici par une procédure d'optimisation, qui est propre à chaque « classe » de dispositif qui est optimisé. Cela signifie que cette procédure d'optimisation peut être réalisée une unique fois, en usine, pour caractériser une pluralité de dispositifs dont les caractéristiques matérielles sont identiques ou suffisamment proches.

Cette procédure d'optimisation peut par exemple être réalisée en définissant un ensemble de mesures d'optimisation pour l'estimateur, par exemple l'erreur moyenne, l'erreur maximale ou encore l'amplitude de la gigue. Ensuite, ces métriques sont pondérées et combinées en une fonction de coût qui définit une mesure de performance de l'estimateur. Enfin, un parcours d'un ensemble de valeurs possibles pour les paramètres est exécuté afin de déterminer le groupe de paramètres qui optimise la fonction de coût compte tenu de l'ensemble de valeurs possibles.

Le choix et l'optimisation de ces valeurs peut être empirique, peut être l'objet d'algorithmes particuliers, et surtout changera avec chaque type d'estimation de la dérivée utilisé.

Parmi les estimateurs algébriques, il serait par exemple possible d'utiliser les estimations décrites dans "Numerical differentiation with annihilators in noisy environment" Numerical Algorithms, vol. 50, no. 4, pp. 439-467, 2009, de M. Mboup, C. Join, et M. Fliess, ou "Algebraic parameter estimation of a multi-sinusoidal waveform signal from noisy data" Proc. ECC 2013, pp. 1902-1907, 2013 de R. Ushirobira, W. Perruquetti, M. Mboup, et M. Fliess.

Parmi les estimateurs de dérivation à modes de glissement d'ordre élevé, il serait possible d'utiliser celui décrit dans "High-order sliding modes: differentiation and output feedback control", Int. J. Control, vol. 76, no. 9-10, pp. 924-941, 2003 de A. Levant.

D'une manière générale, pour éviter les états transitoires pendant les premiers instants depuis le début du mouvement, il sera préférable d'afficher les positions mesurées au lieu des positions estimées. La durée des états transitoires dépend du dispositif.

De manière facultative une étape de post-traitement peut être appliquée aux positions issues de l'étape de prédiction. Ce post-traitement vise à réduire les problèmes de bruit qui peuvent apparaître dans certaines conditions et à lisser la trajectoire dans le cas de tâches de dessin.

La réduction du bruit peut être réalisée par différentes techniques connues de la littérature (moyenne glissante, moyenne pondérée, exponentielle ou parabolique). Dans une variante préférée, la technique décrite dans l'article de Casiez et al "1€ Filter: A Simple Speed-based Low-pass Filter for Noisy Input in Interactive Systems", Proceedings of the ACM Conférence on Human Factors in Computing Systems (CHI '12). ACM Press, pp. 2527-2530 pourra être utilisée car elle présente de bons résultats pour réduire le bruit tout en minimisant le retard perçu introduit.

En ce qui concerne les tâches de dessin, les points acquis par la surface interactive ainsi que la position estimée par la technique de prédiction sont affichés à l'écran, généralement en reliant ces différents points par des segments consécutifs. Lors de la compensation d'une latence importante ou lorsque l'utilisateur exécute des gestes à vitesse importante, le segment qui relie le point prédit au dernier point acquis peut avoir une longueur importante, ce qui introduit un artefact visuel qui peut être gênant. La solution à ce problème est de déterminer différents points intermédiaires entre la dernière position reçue et celle prédite. Cela peut se faire de différentes manières, soit en déterminant ces points pour des valeurs intermédiaires de latence, ou encore en utilisant des courbes de Catmull-Rom et plus particulièrement celles de type centripète.

Annexe A

$$S(k) = \begin{bmatrix} sx1(k) & sy1(k) \\ sx2(k) & sy2(k) \\ sx3(k) & sy3(k) \\ sx4(k) & sy4(k) \\ sx5(k) & sy5(k) \end{bmatrix}$$

$$S(0) = \begin{bmatrix} x(0) & y(0) \\ 0 & 0 \\ 0 & 0 \\ 0 & 0 \\ 0 & 0 \end{bmatrix}$$

$$S(k)[:, i] = S(k)[:, i] +$$

$$\begin{bmatrix} S(k)[2,i] - 5\,b[1,i] * |Eps(k)[i]|^{1+l[i]} * signe(Eps(k)[i]) \\ S(k)[3,i] - 10\,b[2,i]^2 * |Eps(k)[i]|^{1+2l[i]} * signe(Eps(k)[i]) \\ S(k)[4,i] - 10\,b[3,i]^3 * |Eps(k)[i]|^{1+3l[i]} * signe(Eps(k)[i]) \\ S(k)[5,i] - 5\,b[4,i]^4 * |Eps(k)[i]|^{1+4l[i]} * signe(Eps(k)[i]) \\ -\,b[5,i]^5 * |Eps(k)[i]|^{1+5l[i]} * signe(Eps(k)[i]) \end{bmatrix} * dt$$

$$a\big(t(k)\big) = a(t(k-1)) + g * \left( \begin{cases} 1 \ si \ V(k) > Vo \\ 0 \ sinon \end{cases} - a\big(t(k-1)\big) \right)$$

$$P(k) = M(k) + a\big(t(k)\big) * S(k)[2:4, :] * the$$

**Revendications**

1. Dispositif informatique comprenant une interface homme-machine d'entrée (4), un contrôleur (6) et un affichage (10), le contrôleur (6) étant agencé pour commander l'affichage (10) en fonction d'une valeur de commande (M) mesurée à l'interface homme-machine d'entrée (4) à une première fréquence de mesure, **caractérisé en ce que** le contrôleur (6) comprend un dérivateur (8) et est agencé, entre un premier instant et un deuxième instant séparés par une durée tirée de la première fréquence de mesure, pour :

    - appeler le dérivateur (8) pour calculer une estimation de la dérivée de la valeur de commande au deuxième instant à partir de la valeur de commande au premier instant et de la durée tirée de la première fréquence,
    - calculer une valeur de facteur de lissage au deuxième instant (a(t(k))) à partir de l'estimation (V(k)) de la dérivée première de la valeur de commande au deuxième instant et d'une valeur de facteur de lissage au premier instant (a(t(k-1))),
    - calculer une valeur d'affichage (P(k)) à partir de la valeur de commande au premier instant (M(k)) et d'une valeur tirée de l'estimation de la dérivée de la valeur de commande au deuxième instant (S(k)) et de la valeur du facteur de lissage au deuxième instant, et
    - commander l'affichage (10) avec la valeur d'affichage (P(k)).

2. Dispositif selon la revendication 1, dans lequel le dérivateur (8) calcule l'estimation de la dérivée de la valeur de commande au deuxième instant à partir d'un estimateur des dérivées première à cinquième de la valeur de commande.

3. Dispositif selon la revendication 2, dans lequel le dérivateur (8) exécute une boucle à une deuxième fréquence supérieure à la première fréquence dans laquelle l'estimation de la dérivée de la valeur de commande est mise à jour entre le premier instant et le deuxième instant en ajoutant de manière répétée aux dérivées première à cinquième

**EP 3 516 487 B1**

de la valeur de commande au premier instant une valeur tirée de la différence entre la valeur d'affichage (P(k)) au premier instant et la valeur de commande tirée de l'interface homme-machine d'entrée (4) au premier instant.

4. Dispositif selon l'une des revendications précédentes, dans lequel le dérivateur (8) calcule la valeur de facteur de lissage en ajoutant une valeur fixe à un multiple de la valeur de facteur de lissage au premier instant (a(t(k-1))) lorsque l'estimation (V(k)) de la dérivée première de la valeur de commande au deuxième instant est supérieure à une vitesse seuil (V0).

5. Dispositif selon l'une des revendications précédentes, dans lequel le dérivateur (8) calcule la valeur d'affichage (P(k)) en ajoutant à la valeur de commande au premier instant (M(k)), le produit de l'estimation des dérivées secondes à quatrième de la valeur de commande au deuxième instant (S(k)) par un vecteur d'optimisation et par la valeur du facteur de lissage.

6. Procédé de commande d'affichage, **caractérisé en ce qu'**il comprend la mesure à une première fréquence d'une valeur de commande (M) avec une interface homme-machine d'entrée (4), et, entre un premier instant et un deuxième instant séparés par une durée tirée de la première fréquence :

   a. calculer une estimation de la dérivée de la valeur de commande au deuxième instant à partir de la valeur de commande au premier instant et de la durée tirée de la première fréquence,
   b. calculer une valeur de facteur de lissage au deuxième instant (a(t(k))) à partir de l'estimation (V(k)) de la dérivée première de la valeur de commande au deuxième instant et d'une valeur de facteur de lissage au premier instant (a(t(k-1))),
   c. calculer une valeur d'affichage (P(k)) à partir de la valeur de commande au premier instant (M(k)) et d'une valeur tirée de l'estimation de la dérivée de la valeur de commande au deuxième instant (S(k)) et de la valeur du facteur de lissage,
   d. commander l'affichage (10) avec la valeur d'affichage (P(k)).

7. Procédé selon la revendication 6, dans lequel l'opération a. comprend le calcul de l'estimation de la dérivée de la valeur de commande au deuxième instant à partir d'une estimation des dérivées première à cinquième de la valeur de commande.

8. Procédé selon la revendication 7, dans lequel l'opération a. comprend la définition du premier instant comme instant courant, et la répétition des opérations suivantes, à une deuxième fréquence supérieure à la première fréquence :

   al. définir un instant d'estimation en ajoutant une durée tirée de la deuxième fréquence à l'instant courant,
   a2. estimer les dérivées première à cinquième de la valeur de commande à l'instant d'estimation à partir de leurs valeurs à l'instant courant et de la différence entre la valeur calculée à l'opération c. au premier instant et la valeur de commande tirée de l'interface homme-machine d'entrée (4) au premier instant,
   a3. si la différence entre l'instant d'estimation et le premier instant est inférieure à la durée tirée de la première fréquence, définir l'instant d'estimation comme instant courant, et répéter les opérations a1. à a3.

9. Procédé selon l'une des revendication 6 à 8, dans lequel dans l'opération b., la valeur de facteur de lissage est calculée en ajoutant une valeur fixe à un multiple de la valeur de facteur de lissage au premier instant (a(t(k-1))) lorsque l'estimation (V(k)) de la dérivée première de la valeur de commande au deuxième instant est supérieure à une vitesse seuil (V0).

10. Procédé selon l'une des revendications 6 à 8, dans lequel l'opération c. calcule la valeur d'affichage (P(k)) en ajoutant à la valeur de commande au premier instant (M(k)) le produit de l'estimation des dérivées secondes à quatrième de la valeur de commande au deuxième instant (S(k)) par un vecteur d'optimisation et par la valeur du facteur de lissage.


**Patentansprüche**

1. Computervorrichtung, umfassend eine Eingangs-Mensch-Maschinen-Schnittstelle (4), einen Controller (6) und eine Anzeige (10), wobei der Controller (6) angeordnet ist, um die Anzeige (10) in Abhängigkeit von einem in der Eingangs-Mensch-Maschinen-Schnittstelle (4) mit einer ersten Messfrequenz gemessenen Steuerungswert (M) zu steuern, **dadurch gekennzeichnet, dass** der Controller (6) einen Ableiter (8) umfasst und zwischen einem ersten Zeitpunkt und einem zweiten Zeitpunkt angeordnet ist, die durch eine Dauer getrennt sind, die aus der ersten Messfrequenz hergeleitet wird, um:

- den Ableiter (8) aufzurufen, um eine Schätzung der Ableitung des Steuerungswerts zum zweiten Zeitpunkt aus dem Steuerungswert zum ersten Zeitpunkt und der aus der ersten Frequenz hergeleiteten Dauer zu berechnen,
- einen Glättungsfaktorwert zum zweiten Zeitpunkt (a(t(k))) aus der Schätzung (V(k)) der ersten Ableitung des Steuerungswerts zum zweiten Zeitpunkt und einem Glättungsfaktorwert zum ersten Zeitpunkt (a(t(k-1))) zu berechnen,
- einen Anzeigewert (P(k)) aus dem Steuerungswert zum ersten Zeitpunkt (M(k)) und einem aus der Schätzung der Ableitung des Steuerungswerts zum zweiten Zeitpunkt (S(k)) hergeleiteten Wert und dem Wert des Glättungsfaktirs zum zweiten Zeitpunkt zu berechnen, und
- die Anzeige (10) mit dem Anzeigewert (P(k))zu steuern.

2. Vorrichtung nach Anspruch 1, wobei der Ableiter (8) die Schätzung der Ableitung des Steuerungswerts zum zweiten Zeitpunkt aus einem Schätzer der ersten bis fünften Ableitungen des Steuerungswerts berechnet.

3. Vorrichtung nach Anspruch 2, wobei der Ableiter (8) eine Schleife mit einer zweiten Frequenz, größer als die erste Frequenz ausführt, bei der die Schätzung der Ableitung des Steuerungswerts zwischen dem ersten Zeitpunkt und dem zweiten Zeitpunkt aktualisiert wird, indem in wiederholter Form zu den ersten bis fünften Ableitungen des Steuerungswerts zum ersten Zeitpunkt ein Wert hinzugeführt wird, der aus der Differenz zwischen dem Anzeigewert (P(k)) zum ersten Zeitpunkt und dem Steuerungswert hergeleitet wird, der aus der Eingangs-Mensch-Maschinen-Schnittstelle (4) zum ersten Zeitpunkt hergeleitet wird.

4. Vorrichtung nach einem der vorstehenden Ansprüche, wobei der Ableiter (8) den Glättungsfaktorwert berechnet, indem ein fester Wert zu einem Vielfachen des Glättungsfaktorwerts zum ersten Zeitpunkt (a(t(k-1))) hinzugefügt wird, wenn die Schätzung (V(k)) der ersten Ableitung des Steuerungswerts zum zweiten Zeitpunkt höher als eine Grenzgeschwindigkeit (V0) ist.

5. Vorrichtung nach einem der vorstehenden Ansprüche, wobei der Ableiter (8) den Anzeigewert (P(k)) berechnet, indem zu dem Steuerungswert zum ersten Zeitpunkt (M(k)) das Produkt der Schätzung der zweiten bis vierten Ableitungen des Steuerungswerts zum zweiten Zeitpunkt (S(k)) mal einem Optimierungsvektor und mal dem Glättungsfaktorwert hinzugefügt wird.

6. Anzeigesteuerungsverfahren, dadurch gekenzeichnet, dass es die Messung mit einer ersten Frequenz eines Steuerungswerts (M) mit einer Eingangs-Mensch-Maschinen-Schnittstelle (4), und, zwischen einem ersten Zeitpunkt und einem zweiten Zeitpunkt, die durch eine Dauer getrennt sind, die aus der ersten Frequenz hergeleitet wird, umfasst:

a. Berechnen einer Schätzung der Ableitung des Steuerungswerts zum zweiten Zeitpunkt aus dem Steuerungswert zum ersten Zeitpunkt und der Dauer, die aus der ersten Frequenz hergeleitet wird,
b. Berechnen eines Glättungsfaktorwertes zum zweiten Zeitpunkt (a(t(k))) aus der Schätzung (V(k)) der ersten Ableitung des Steuerungswerts zum zweiten Zeitpunkt und einem Glättungsfaktorwert zum ersten Zeitpunkt (a(t(k-1))),
c. Berechnen eines Anzeigewerts (P(k)) aus dem Steuerungswert zum ersten Zeitpunkt (M(k)) und einem aus der Schätzung der Ableitung des Steuerungswerts zum zweiten Zeitpunkt (S(k)) hergeleiteten Wert und dem Wert des Glättungsfaktirs,
d. Steuern der Anzeige (10) mit dem Anzeigewert (P(k)).

7. Verfahren nach Anspruch 6, wobei der Vorgang a. die Berechnung der Schätzung der Ableitung des Steuerungswerts zum zweiten Zeitpunkt aus einer Schätzung der ersten bis fünften Ableitung des Steuerungswerts umfasst.

8. Verfahren nach Anspruch 7, wobei der Vorgang a. die Definition des ersten Zeitpunkts als laufenden Zeitpunkt umfasst und die Wiederholung der folgenden Vorgänge mit einer zweiten Frequenz, größer als die erste Frequenz:

a1. Definieren eines Schätzungszeitpunkts durch Hinzufügen einer Dauer, die aus der zweiten Frequenz zum laufenden Zeitpunkt hergeleitet wird,
a2. Schätzen der ersten bis fünften Ableitungen des Steuerungswerts zum Schätzungszeitpunkt aus ihren Werten zum laufenden Zeitpunkt und aus der Differenz zwischen dem im Vorgang c. berechneten Wert zum ersten Zeitpunkt und dem Steuerungswert, der aus der Eingangs-Mensch-Maschinen-Schnittstelle (4) zum ersten Zeitpunkt hergeleitet wird,

a3. Falls die Differenz zwischen dem Schätzungszeitpunkt und dem ersten Zeitpunkt kleiner als die Dauer ist, die aus der ersten Frequenz hergeleitet wird, Definieren des Schätzungszeitpunkts als laufenden Zeitpunkt und Wiederholen der Vorgänge a1. bis a3.

**9.** Verfahren nach einem der Ansprüche 6 bis 8, wobei im Vorgang b. der Glättungsfaktorwert berechnet wird, indem ein fester Wert zu einem Vielfachen des Glättungsfaktorwerts zum ersten Zeitpunkt (a(t(k-1))) hinzugefügt wird, wenn die Schätzung (V(k)) der ersten Ableitung des Steuerungswerts zum zweiten Zeitpunkt höher als eine Grenzgeschwindigkeit (V0) ist.

**10.** Verfahren nach einem der Ansprüche 6 bis 8, wobei der Vorgang c. den Anzeigewert (P(k)) berechnet, indem zu dem Steuerungswert zum ersten Zeitpunkt (M(k)) das Produkt der Schätzung der zweiten bis vierten Ableitungen des Steuerungswerts zum zweiten Zeitpunkt (S(k)) mal einem Optimierungsvektor und mal dem Glättungsfaktorwert hinzugefügt wird.

## Claims

**1.** A computing device comprising an input human-computer interface (4), a controller (6) and a display (10), the controller (6) being arranged for controlling the display (10) according to a control value (M) measured at the input human-computer interface (4) at a first measurement frequency, **characterized in that** the controller (6) comprises a differentiator (8) and is arranged, between a first instant and a second instant separated by a duration derived from the first measurement frequency, for:

- calling on the differentiator (8) to calculate an estimate of the derivative of the control value at the second instant from the control value at the first instant and the duration derived from the first frequency,
- calculating a smoothing factor value at the second instant (a(t(k))) from the estimate (V(k)) of the first derivative of the control value at the second instant and a smoothing factor value at the first instant (a(t(k-1))),
- calculating a display value (P(k)) from the control value at the first instant (M(k)) and a value derived from the estimate of the derivative of the control value at the second instant (S(k)) and the value of the smoothing factor at the second instant, and
- controlling the display (10) with the display value (P(k)).

**2.** The device as claimed in claim 1, wherein the differentiator (8) calculates the estimate of the derivative of the control value at the second instant from an estimator of the first to fifth derivatives of the control value.

**3.** The device as claimed in claim 2, wherein the differentiator (8) executes a loop at a second frequency higher than the first frequency wherein the estimate of the derivative of the control value is updated between the first instant and the second instant by repeatedly adding to the first to fifth derivatives of the control value at the first instant a value derived from the difference between the display value (P(k)) at the first instant and the control value derived from the input human-computer interface (4) at the first instant.

**4.** The device as claimed in one of the preceding claims, wherein the differentiator calculates (8) the smoothing factor value by adding a fixed value to a multiple of the smoothing factor value at the first instant (a(t(k-1))) when the estimate (V(k)) of the first derivative of the control value at the second instant is greater than a threshold speed (V0).

**5.** The device as claimed in one of the preceding claims, wherein the differentiator (8) calculates the display value (P(k)) by adding to the control value at the first instant (M(k)) the product of the estimate of the second to fourth derivatives of the control value at the second instant (S(k)) by an optimization vector and by the value of the smoothing factor.

**6.** A display control method, **characterized in that** it comprises the measurement at a first frequency of a control value (M) with an input human-computer interface (4), and, between a first instant and a second instant separated by a duration derived from the first frequency:

a. calculating an estimate of the derivative of the control value at the second instant from the control value at the first instant and the duration derived from the first frequency,

b. calculating a smoothing factor value at the second instant $(a(t(k)))$ from the estimate $(V(k))$ of the first derivative of the control value at the second instant and a smoothing factor value at the first instant $(a(t(k-1)))$,

c. calculating a display value $(P(k))$ from the control value at the first instant $(M(k))$ and a value derived from the estimate of the derivative of the control value at the second instant $(S(k))$ and the value of the smoothing factor,

d. controlling the display (10) with the display value $(P(k))$.

7. The method as claimed in claim 6, wherein operation a. comprises calculating the estimate of the derivative of the control value at the second instant from an estimate of the first to fifth derivatives of the control value.

8. The method as claimed in claim 7, wherein operation a. comprises the definition of the first instant as the current instant, and the repetition of the following operations, at a second frequency greater than the first frequency:

a1. defining an estimate instant by adding a duration derived from the second frequency at the current instant,

a2. estimating the first to fifth derivatives of the control value at the estimate instant from their values at the current instant and the difference between the value calculated in operation c. at the first instant and the control value derived from the input human-computer interface (4) at the first instant,

a3. if the difference between the estimate instant and the first instant is less than the duration derived from the first frequency, defining the estimate instant as the current instant, and repeating operations a1. to a3.

9. The method as claimed in one of claims 6 to 8, wherein in operation b., the smoothing factor value is calculated by adding a fixed value to a multiple of the smoothing factor value at the first instant $(a(t(k-1)))$ when the estimate $(V(k))$ of the first derivative of the control value at the second instant is greater than a threshold speed $(V0)$.

10. The method as claimed in one of claims 6 to 8, wherein operation c. calculates the display value $(P(k))$ by adding to the control value at the first instant $(M(k))$ the product of the estimate of the second to fourth derivatives of the control value at the second instant $(S(k))$ by an optimization vector and by the value of the smoothing factor.

2

4

6

8

10

**Fig.1**

Init() 200

k++ 205

(t(k);M(k))=Get_m(k) 210

S(k)=S(k-1) 220

225

tau<t(k)?

230

Eps(k)=S(k;1)-M(k)

S(k)+=Der(k)*dt

240

245 tau += dt

V(k)=Sqr(S(k;2)) 250

a(k)=Adapt(V(k)) 260

P(k)=Evl(a(k),S(k),the) 270

**Fig.2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2014035827 A

**Littérature non-brevet citée dans la description**

- **W. PERRUQUETTI ; T. FLOQUET ; E. MOULAY.** Finite-time observers: application to secure communication. *IEEE Transactions on Automatic Control,* 2008, vol. 53 (1), 356-360
- Numerical differentiation with annihilators in noisy environment. *Numerical Algorithms,* 2009, vol. 50 (4), 439-467
- **DE M. MBOUP ; C. JOIN ; M. FLIESS.** Algebraic parameter estimation of a multi-sinusoidal waveform signal from noisy data. *Proc. ECC,* 2013, 1902-1907
- **DE R. USHIROBIRA ; W. PERRUQUETTI ; M. MBOUP ; M. FLIESS.** *PROC. ECC,* 2013
- **DE A. LEVANT.** High-order sliding modes: differentiation and output feedback control. *Int. J. Control,* 2003, vol. 76 (9-10), 924-941
- 1€ Filter: A Simple Speed-based Low-pass Filter for Noisy Input in Interactive Systems. **CASIEZ et al.** Proceedings of the ACM Conférence on Human Factors in Computing Systems (CHI '12). ACM Press, 2527-2530